# EUROPEAN PATENT SPECIFICATION

(11) **EP 4 175 050 B1**
(45) Date of publication and mention of the grant of the patent: **11.11.2026**
(21) Application number: 21867168.3
(22) Date of filing: 10.09.2021
(51) Int. Cl.: H01M 50/531, H01M 50/54, H01M 50/105, H01M 10/04, H01M 50/586, H01M 50/543, H01M 50/172, H01M 50/183, H01M 50/116

(54) **SECONDARY BATTERY AND METHOD FOR MANUFACTURING THE SAME**
SEKUNDÄRBATTERIE UND HERSTELLUNGSVERFAHREN DAFÜR
BATTERIE SECONDAIRE ET SON PROCÉDÉ DE FABRICATION

(30) Priority: 11.09.2020 KR 20200117212; 08.09.2021 KR 20210120034
(43) Date of publication of application: 03.05.2023
(73) Proprietor: LG Energy Solution, Ltd., Seoul 07335 (KR)
(72) Inventor: KIM, Gi Man, Daejeon 34122 (KR); KIM, Dae Hong, Daejeon 34122 (KR); KANG, Kyoung Won, Daejeon 34122 (KR); KWON, Hyung Ho, Daejeon 34122 (KR)
(74) Representative: Plasseraud IP
(86) International application number: PCT/KR2021/012356
(87) International publication number: WO 2022/055303

(56) References cited:
- JP-A- 2013 171 618
- JP-B2- 6 176 743
- KR-A- 20070 099 430
- KR-A- 20180 121 169
- KR-A- 20190 037 110

## Description

### CROSS-REFERENCE TO RELATED APPLICATION

The present application claims the benefit of the priority of Korean Patent Application Nos. 10-2020-0117212, filed on September 11, 2020, and 10-2021-0120034, filed on September 08, 2021.

### TECHNICAL FIELD

The present invention relates to a secondary battery and a method for manufacturing the same, and more particularly, to a secondary battery, in which a margin (i.e., an extra length) at which a length of an electrode tab is capable of increasing is secured, and a method for manufacturing the same.

### BACKGROUND ART

In general, secondary batteries refer to chargeable and dischargeable, unlike primary batteries that are not chargeable. The secondary batteries are being widely used for mobile phones, notebook computers, and camcorders, electric vehicles, and the like.

Such a secondary battery is classified into a can type secondary battery in which an electrode assembly is built in a metal can and a pouch type secondary battery in which an electrode assembly is built in a pouch. In addition, the pouch type secondary battery comprises an electrode assembly having a structure, in which electrodes and separators are alternately stacked, an electrode lead coupled to an electrode tab of the electrode assembly, and a pouch accommodating the electrode assembly in a state in which a front end of the electrode lead is withdrawn to the outside. JP 6 176743 B2 discloses a secondary battery according to the preamble of claim 1.

However, in the secondary battery according to the related art, when a swelling phenomenon occurs in the electrode assembly, there is a problem in that the electrode tab connected between the electrode assembly and the electrode lead is stretched to cause disconnection.

In order to solve this problem, the secondary battery according to the related art significantly secures a length between the electrode and the electrode lead to increase in length of the electrode tab, thereby preventing the electrode tab from being disconnected. However, when the electrode tab increases in length as described above, there is a problem in that a size of the secondary battery unnecessarily increases.

### DISCLOSURE OF THE INVENTION

### TECHNICAL PROBLEM

In a secondary battery and a method for manufacturing the same according to the present invention for solving the above problem, a margin, at which a length of the electrode tab is capable of increasing, so that even if swelling occurs in the electrode assembly, the length of the electrode tab increases to prevent the electrode tab from being disconnected and prevent the secondary battery from increasing in length.

### TECHNICAL SOLUTION

A secondary battery according to the present invention for achieving the above object and a method for manufacturing a secondary battery according to the attached independent claims 1 and 8. Dependent claims define further advantageous embodiments.

### ADVANTAGEOUS EFFECTS

The secondary battery according to the present invention comprises the electrode tab provided with the bent part, and the bent part comprises the first bent surface connected to the coupling part , the coupling part being formed as a substantially straight portion, and bent at the first-b angle, the second bent surface connected to the connection part, the connection part being formed as a substantially straight portion, and bent at the second-b angle, and the connection surface connecting the first bent surface to the second bent surface. The first-b angle has the angle greater than the second-b angle. Due to such the feature, the electrode tab may secure the margin (i.e., the extra length) that is capable of increasing in length. That is, when the swelling occurs in the electrode assembly, the bent part of the electrode tab may be unfolded to increase in length, thereby preventing the disconnection of the electrode tab from occurring. Particularly, it is possible to prevent the secondary battery from increasing in size, thereby improving the productivity.

In addition, in the secondary battery of the present invention, the first and second bent surfaces may be provided as the curved surfaces. Due to such the feature, it is possible to prevent the first and second bent surfaces from being folded.

### BRIEF DESCRIPTION OF THE DRAWINGS

FIG. 1 is a cross-sectional view of a secondary battery according to a first embodiment of the present invention.
FIG. 2 is a partially enlarged view of FIG. 1.
FIG. 3 is a side view illustrating an electrode tab of the secondary battery according to the first embodiment of the present invention.
FIG. 4 is a cross-sectional view illustrating a state in which an electrode assembly of the secondary battery is deformed according to the first embodiment of the present invention.
FIG. 5 is a flowchart illustrating a method for manufacturing a second battery according to a second embodiment of the present invention.
FIG. 6 is a cross-sectional view illustrating a process (a) in the method for manufacturing the second battery according to the second embodiment of the present invention.
FIG. 7 is a cross-sectional view illustrating a process (b) in the method for manufacturing the second battery according to the second embodiment of the present invention.
FIG. 8 is a side view of an electrode tab that is bent in the process (b).
FIG. 9 is a cross-sectional view illustrating processes (b) and (d) in the method for manufacturing the second battery according to the second embodiment of the present invention.
FIG. 10 is a cross-sectional view illustrating a process (e) in the method for manufacturing the second battery according to the second embodiment of the present invention.
FIG. 11 is a side view of an electrode tab that is deformed in the process (e).
FIG. 12 is a cross-sectional view illustrating a process (f) in the method for manufacturing the second battery according to the second embodiment of the present invention.
FIGS. 13 to 16 are photographed images illustrating an experimental example of the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms. In the drawings, anything unnecessary for describing the present invention will be omitted for clarity, and also like reference numerals in the drawings denote like elements.

### [Secondary battery according to first embodiment of the present invention]

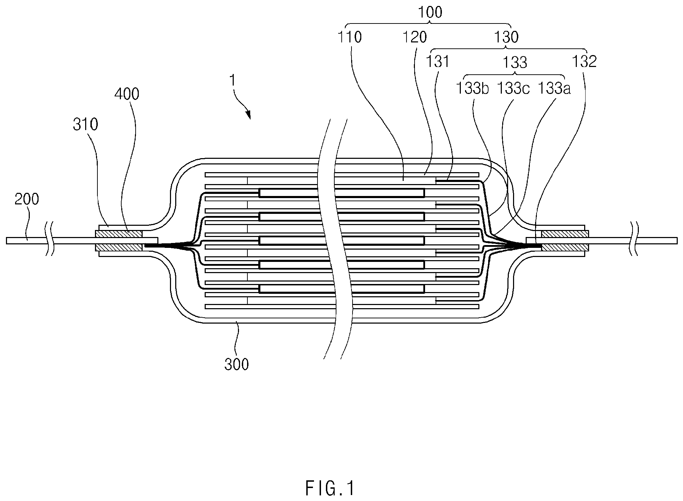

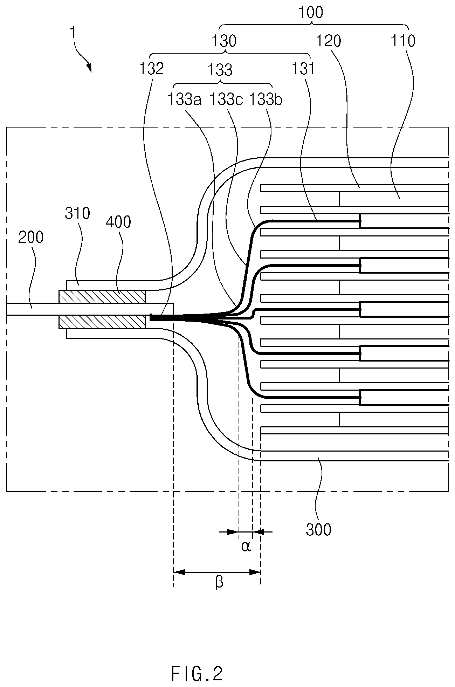

As illustrated in FIGS. 1 to 4, a secondary battery 1 according to a first embodiment of the present invention comprises an electrode assembly 100 provided with a plurality of electrode tabs, an electrode lead 200 coupled to the plurality of electrode tabs, a pouch 300 accommodating the electrode assembly 100 in a state in which a front end of the electrode lead 200 is withdrawn to the outside, and an electrode film 400 provided on the electrode lead 200 disposed on an sealing part 310 of the pouch 300.

### Electrode assembly

The electrode assembly 100 comprises a plurality of electrodes 110, a separator 120 disposed between the plurality of electrodes 110, and a plurality of electrode tabs 130 respectively connected to the plurality of electrodes 110.

Here, the plurality of electrodes 110 may be a positive electrode and a negative electrode, and the plurality of electrode tabs 130 may be a positive electrode tab connected to the positive electrode and a negative electrode tab connected to the negative electrode.

The electrode assembly 100 having such a configuration has a structure in which the plurality of electrodes 110 are stacked vertically with the separator 120 therebetween. In this case, the plurality of electrode tabs 130 are connected to the plurality of electrodes 110 in the same direction. For example, the plurality of positive electrode tabs are arranged to face a left direction when viewed in FIG. 1, and the plurality of negative electrode tabs are arranged to face a right direction as viewed in FIG. 1.

The plurality of electrode tabs 130 comprise a connection part 131 connected to each of the plurality of electrodes 110 and a coupling part 132 that is welded in a state of being combined into a single mass and is coupled to the electrode lead 200.

### Electrode lead

The electrode lead 200 is configured to connect the electrode assembly to an external device and is coupled to the coupling part 132 of the electrode tab 130.

### Pouch

The pouch 300 is configured to accommodate the electrode assembly in a state in which the front end of the electrode lead 200 is withdrawn to the outside. That is, the pouch 300 comprises an accommodating part accommodating the electrode assembly 100 and a sealing part 310 sealing the accommodating part.

The pouch 300 further comprises a lead film 400 for improving sealing force between the sealing part 310 and the electrode lead 200.

### Lead film

The lead film 400 has a structure surrounding an outer circumferential surface of the electrode lead 200 disposed on the sealing part 310. That is, the lead film 400 may be bonded to the sealing part 310 when the sealing part 310 is thermally fused to improve the sealing force between the electrode lead and the sealing part.

The secondary battery 1 according to the first embodiment of the present invention has a structure, in which even if the electrode assembly is swelled to increase in thickness or length, disconnection of the electrode tab 130 is prevented.

That is, in the secondary battery 1 according to the first embodiment of the present invention, the electrode tab 130 is provided in a bent state to secure a margin. Thus, when the electrode assembly 100 is swelled, the bent electrode tab 130 may be unfolded to be flat, and thus, the length of the electrode tab 130 may increase to prevent the electrode tab 130 from being disconnected.

The plurality of electrode tabs 130 further comprise a bent part 133 provided between the connection part 131 and the coupling part 132.

The bent part 133 comprises a first bent surface 133a connected to the coupling part 132 and bent at a first-b angle 1b° along a thickness direction (approximately ' 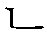 ' shape) of the electrode assembly 100, a second bent surface 133b connected to the connection part 131 and bent at a second-b angle 2b° along a direction (approximately ' 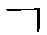 ' shape) parallel to a longitudinal direction of the electrode assembly 100, and a connection surface 133c connecting the first bent surface 133a to the second bent surface 133b.

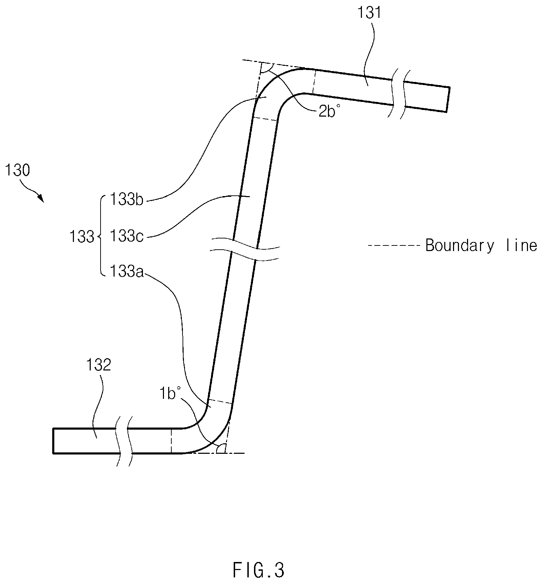

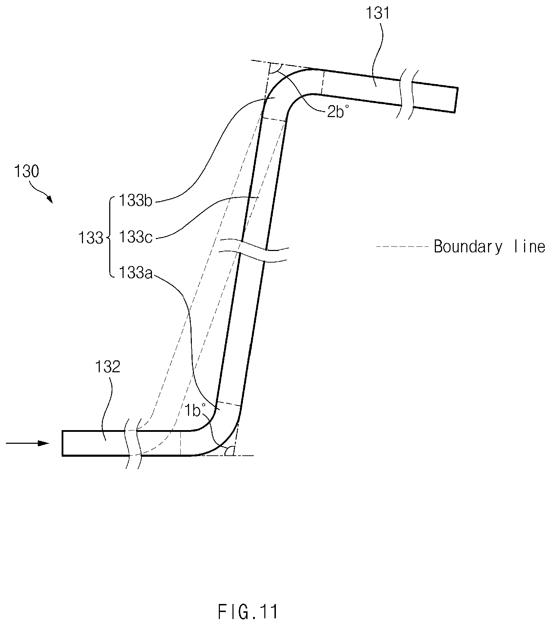

As illustrated in FIGS. 3, 8, and 11, a boundary line (---) is drawn to distinguish positions of the first bent surface 133a, the second bent surface 133b, and the connecting surface 133c from each other.

Here, the first-b angle 1b° is greater than 90° when viewed with respect to the connection part 131. Thus, even when the electrode tab is pressed, the bent part 133 may be induced to be folded in a direction in which the bent part 133 does not face the electrode assembly, and as a result, the electrode may be prevented from being in contact with an electrode having a polarity different from that of the electrode tab.

In addition, the second-b angle 2b° is greater than 90° when viewed with respect to the coupling part 132. Thus, even when the electrode tab 130 is compressed in the thickness direction of the electrode assembly, the bent part 133 may be prevented from being folded in a direction in which the bent part 133 faces the electrode assembly, thereby preventing the electrode tab from being in contact with an electrode having a different polarity.

The first-b angle 1b° is greater than the second-b angle 2b°. That is, the second-b angle 2b° is formed to be less than the first-b angle 1b° to minimize the space between the electrode tab and the electrode assembly, and the first-b angle 1b° is formed to be greater than the second-b angle 2b° to allow the electrode lead and the electrode assembly to be largely spaced apart from each other. In addition, the first-b angle 1b° is formed to be greater than the second-b angle 2b° to significantly secure a margin between the electrode tab and the pouch.

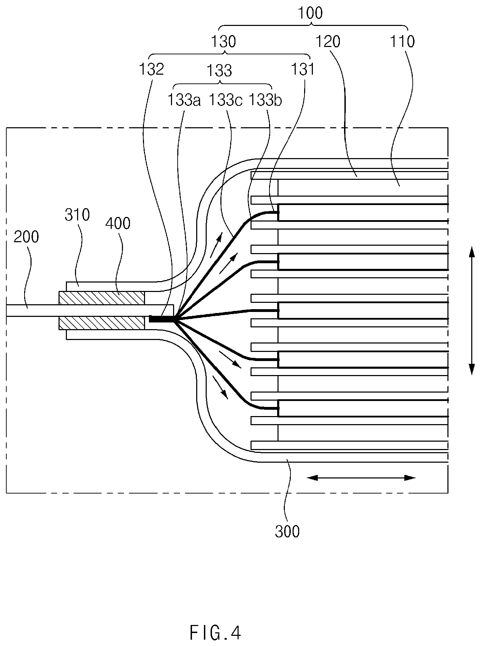

Referring to FIG. 4, in the plurality of electrode tabs 130 having such the structure, when the electrode assembly 100 is swelled, a thickness or length of the electrode assembly 100 may increase, and thus, the first and second bent surfaces 133a and 133b of the bent part 133 may be unfolded to prevent the electrode tab 130 from being disconnected. That is, since the electrode tab 130 has the bent shape, the margin may be secured to prevent the electrode tab 130 from being disconnected.

Particularly, each of the plurality of electrode tabs 130 may be made of a metal material having restoring force, and thus, when the electrode assembly 100 returns to its original shape, the bent part 133 may also return to its original shape, and as a result, efficiency in reuse may be improved.

Therefore, since the electrode assembly 100 comprises the electrode tab 130 having the secured margin, even if the electrode assembly is swelled, the disconnection of the electrode tab 130 may be prevented to improve the safety.

The first bent surface 133a or the second bent surface 133b is formed as a bent surface. Thus, it is possible to prevent the first and second bent surfaces 133b from being folded at a right angle due to an external impact. Particularly, when the swelling occurs in the electrode assembly 100, the electrode assembly 100 may be unfolded more quickly to significantly prevent the electrode tab 130 from being disconnected.

A distance β between an end of the separator and an end of the coupling part 132, which face each other, in the electrode assembly 100 is 2.0 mm to 4.5 mm, preferably 3.5 mm. That is, when the electrode tab 130 is bent, the distance β between the end of the separator 120 and the end of the coupling part 132 is close to 2.0 mm to 4.5 mm. Thus, the secondary battery may be designed to be more compact in side. Here, when the distance between the end of the separator 120 and the end of the coupling part 132 is 2.0 mm or less, the electrode tab 130 may be in contact with the electrode having the different polarity or the electrode lead 200 having the different polarity to cause short circuit. When the distance between the end of the separator 120 and the end of the coupling part 132 is 4.5 mm or more, the secondary battery may unnecessarily increase in size.

When viewed in the longitudinal direction of the electrode assembly 100, a distance α from one end to the other end of the connection surface 133c to which each of the first bent surface 133a and the second bent surface 133b is connected is 0.5 mm to 2.0mm, preferably 1.0 mm. Accordingly, the length of the secondary battery may be minimized, and also, the margin of the electrode tab 130 may be stably secured. Here, if the distance α from one end to the other end of the connection surface 133c is 0.5 mm or less, there is a problem in that the electrode tab 130 and the electrode assembly 100 are in contact with each other, and if the distance α is 2.0 mm or more, there is a problem in that the secondary battery largely increases in length to deteriorate a product quality.

Referring to FIG. 3, the first-b angle 1b° of the first bent surface 133a is inclined to be bent at 100° to 120°, preferably 109° to 116° in the thickness direction of the electrode assembly 100 with respect to the coupling part 132, and the second-b angle 2b° of the second bent surface 133b is inclined to be bent at 94° to 104°, preferably 98° to 100° with respect to the connection part 131. Thus, since each of the first and second bent surfaces 133a and 133b is inclined at the predetermined angle, the bent part 133 may maximally secure the margin of the electrode tab 130 without damaging the pouch or separator.

Therefore, since the secondary battery 1 according to the first embodiment of the present invention comprises the electrode tab 130 having the first and second bent surfaces, the electrode tab 130 may be prevented from being disconnected to improve the safety.

Hereinafter, a method for manufacturing the secondary battery according to the second embodiment of the present invention will be described.

### [Method for manufacturing secondary battery according to second embodiment of the present invention]

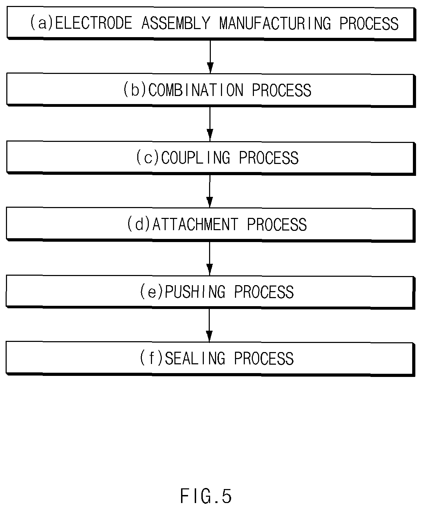

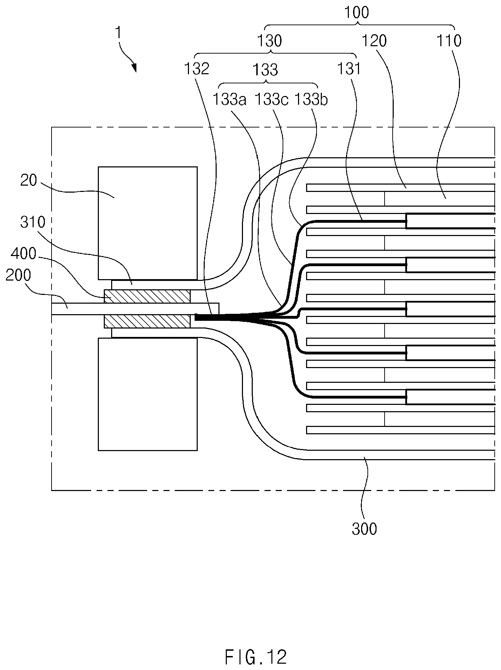

As illustrated in FIGS. 5 to 12, a method for manufacturing a secondary battery according to a second embodiment of the present invention comprises an electrode assembly manufacturing process (a), a combination process (b), a coupling process (c), an attachment process (d), a pushing process (e), and a sealing process (f).

### (a) Electrode assembly manufacturing process

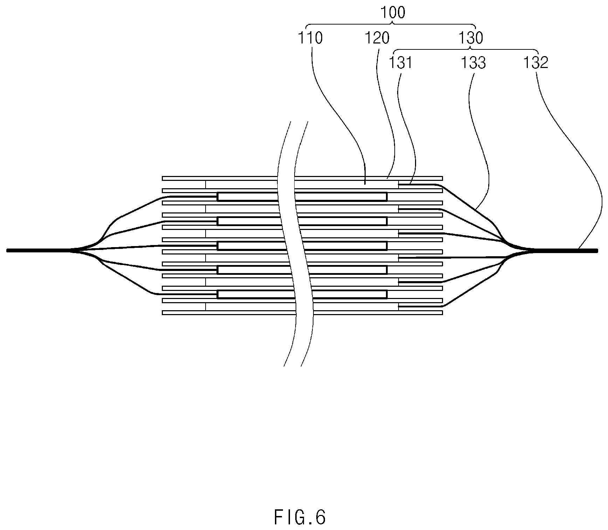

In the process (a), as illustrated in FIG. 6, an electrode 110 provided with an electrode tab 130 is provided in plurality. Next, a plurality of electrodes 110 and a plurality of separators 120 are alternately disposed to manufacture an electrode assembly 100. Here, the electrode tabs 130 provided on the plurality of electrodes 110 are disposed to face the same direction.

### (b) Combination process

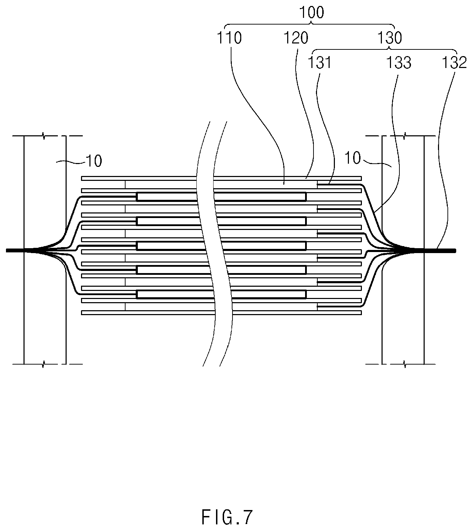

In the process (b), as illustrated in FIG. 7, sides of the plurality of electrode tabs 130 are compressed using a pair of compression blocks 10 to combine front ends of the electrode tabs 130 into a single mass.

Here, the sides of the plurality of electrode tabs are bent at a first-a angle 1a° in a thickness direction of the electrode assembly 100 to form a first bent surface 133a, and other ends are bent at a second-a angle 2a° in the thickness of the electrode assembly 100 to form a second bent surface 133b. Here, a connection surface 133c is formed between the first bent surface 133a and the second bent surface 133b.

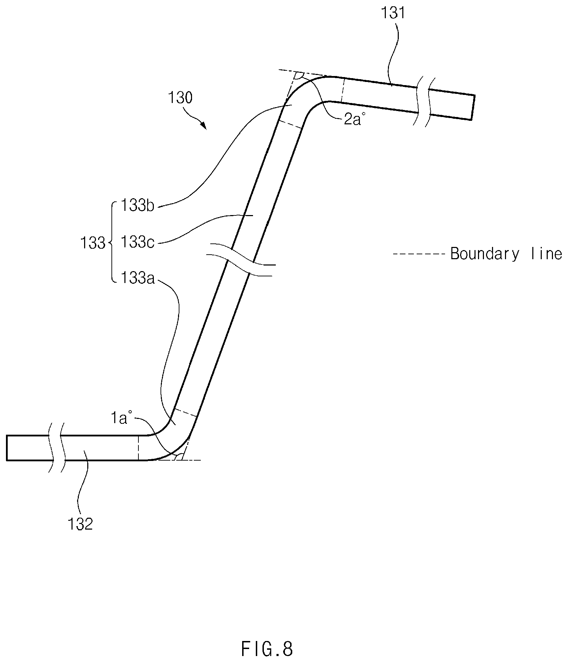

In summary, as illustrated in FIG. 8, the electrode tab 130 comprises a connection part 131 connected to an electrode, a coupling part 132 combined into a mass and coupled to an electrode lead 200, and a bent part 133 provided between the connection part 131 and the coupling part 132. Also, the bent part 133 comprises a first bent surface 133a connected to the coupling part 132 and bent at the first-a angle 1a°, a second bent surface 133b connected to the connection part 131 and bent at the second-a angle 2a°, and a connection surface 133c connecting the first bent surface 133a to the second bent surface 133b.

Here, edges of the pair of compression blocks 10 are formed as curved surface, and thus, the first bent surface 133a compressed by the pair of compression blocks 10 is formed as a curved surface.

The first-a angle 1a° of the first bent surface 133a is inclined to be bent at 130° to 150°, preferably 148° in the thickness direction of the electrode assembly 100 with respect to the coupling part 132, and the second-a angle 2a° of the second bent surface 133b is inclined to be bent at 94° to 104°, preferably 99° with respect to the connection part 131.

### (c) Coupling process

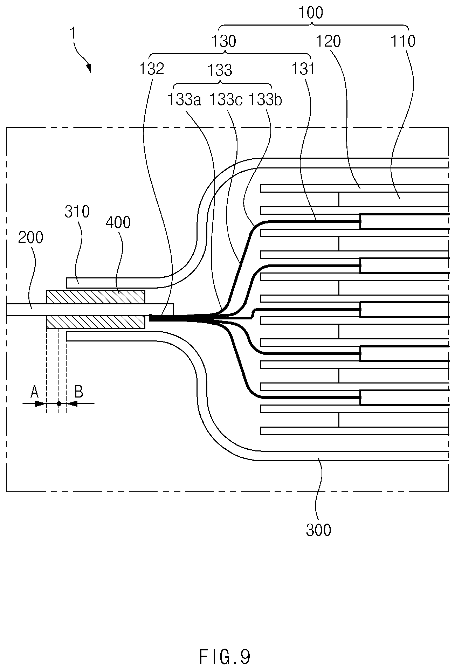

In the process (c), as illustrated in FIG. 9, the front ends of the electrode tabs 130 combined into the single mass are welded to form the coupling part 132, and the electrode lead 200 is coupled to the coupling part 132.

After the process (c), when viewed in a longitudinal direction of the electrode assembly, a distance α from one end to the other end of the connection surface 133c to which each of the first bent surface 133a and the second bent surface 133b is connected is 2.0 mm to 3.0mm, preferably 2.0 mm. That is, the distance α from one end to the other end of the connection surface 133c is secured so that the bent part 133 is pressed.

### (d) Attachment process

In the process (d), the electrode assembly is accommodated in a pouch 300 in a state in which a front end of the electrode lead 200 is withdrawn to the outside, and then, an electrode film 400 is attached to the electrode lead 200 disposed on a sealing part 310 of the pouch 300. Here, the lead film 400 is attached to be withdrawn further by a first length B to the outside of the sealing part 310 of the pouch 300.

That is, referring to FIG. 9, the lead film 400 is withdrawn by a length A to the outside of the sealing part 310, and in the present application, the lead film 400 is withdrawn further by the first length B to the outside of the sealing part of the pouch 300.

Here, the first length B may be 1 mm to 2 mm, preferably 1 mm.

### (e) Pushing process

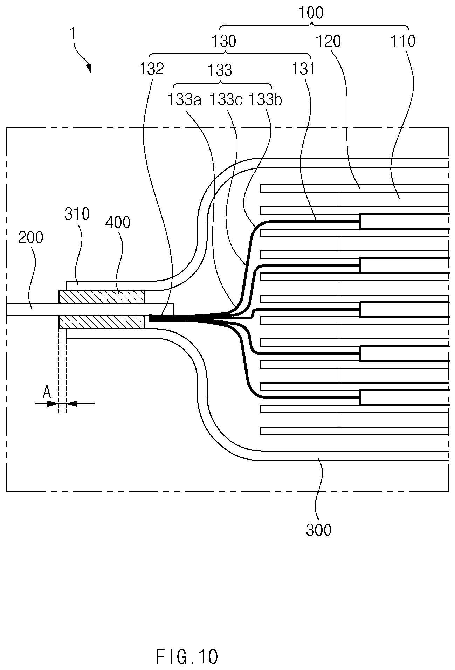

In the process (e), as illustrated in FIG. 10, the lead film 400 is pushed to be inserted by the first length B into the pouch 300 with respect to the sealing part 310 of the pouch 300. Thus, the electrode lead 200 is inserted by the first length B into the pouch 300 by the lead film 400, and the bent part 133 is deformed while being pressed by the electrode lead 200 in a direction of the electrode assembly 100. Here, a first-a angle of the first bent surface 133a is adjusted to be reduced to a first-b angle, and a second-a angle of the second bent surface 133b is adjusted to be reduced to a second-b angle. Here, the first-b angle of the first bent surface 133a is connected to the coupling part that is combined into the single mass so as to be largely adjusted in angle, and the second-b angle of the second bent surface 133b is connected to the plurality of connection parts so as to be adjusted small in angle or so as not to be adjusted in angle. Thus, since the first-b angle is largely changed compared to the first-a angle, the first-b angle is greater than the second-b angle.

Here, the lead film 400 and the sealing part 310 are separated from each other without being sealed.

Here, the first-b angle 1b° of the first bent surface 133a is inclined to be bent at 100° to 120°, preferably 109° to 116° in the thickness direction of the electrode assembly 100 with respect to the coupling part 132 and also inclined to be optimally bent at 111°. The second-b angle 2b° of the second bent surface 133b is 94° to 104°, preferably 98° to 100°, and optimally, 99° with respect to the connection part 131.

After the process (e), a distance between an end of the separator 120 and an end of the coupling part 132, which face each other, is 2.0 mm to 4.5 mm, preferably 3.5 mm.

That is, before the process (e), the distance between the end of the separator 120 and the end of the coupling part 132, which face each other, is 4.5 mm, and after the process (e), the distance between the end of the separator 120 and the end of the coupling part 132 is 3.5 mm.

In addition, after the process (e), when viewed in the longitudinal direction of the electrode assembly, the distance from one end of the bent surface, to which the first bent surface is connected, to the other end of the bent surface, to which the second bent surface 133b is connected, is 0.5 mm to 2.0 mm, preferably 1.0 mm. Thus, a length of the secondary battery in the longitudinal direction may be minimized, and as a result, the secondary battery may increase in size.

### (f) Sealing process

In the process (f), the sealing part 310 of the pouch 300 is sealed using a sealing block 20. Thus, the electrode assembly 100 is accommodated in the pouch 300 so as to be sealed.

When the above processes are completed, a finished secondary battery 1 may be manufactured.

A process of inspecting whether the first-b angle of the first bent surface 133a and the second-b angle of the second bent surface 133b are within a preset angle range is further performed between the process (e) and the process (f).

### (el) Inspection process

In the process (e1), the secondary battery 1 is vision-photographed, an image of the electrode assembly is output from the photographed image, the first-b angle of the first bent surface 133a and the second-b angle of the second bent surface 133b are measured from the photographed output image of the electrode assembly, and the first-b angle of the first bent surface 133a and the second-b angle of the second bent surface 133b, which are measured, are compared to the preset angle to inspect whether detects occur.

Here, the preset angle range of the first angle is 109° to 116°, and the preset angle range of the second angle is 94° to 104°.

Thus, in the process (e1), the bending state of the electrode tab 130 may be inspected.

In the process (e1), when viewed in a longitudinal direction of the electrode assembly, whether a distance α from one end to the other end of the connection surface 133c to which each of the first bent surface 133a and the second bent surface 133b is connected is 0.5mm to 2.0mm, preferably 2.0 mm is further inspected.

Therefore, in a method for manufacturing the secondary battery according to the second embodiment of the present invention, a secondary battery 1 having a secured margin may be manufactured.

### [Experimental Example]

In the method for manufacturing the secondary battery according to the second embodiment of the present application, four secondary batteries manufactured up to the attachment process (d) are prepared. The four secondary batteries have the same structure and are referred to as first to fourth experimental pieces.

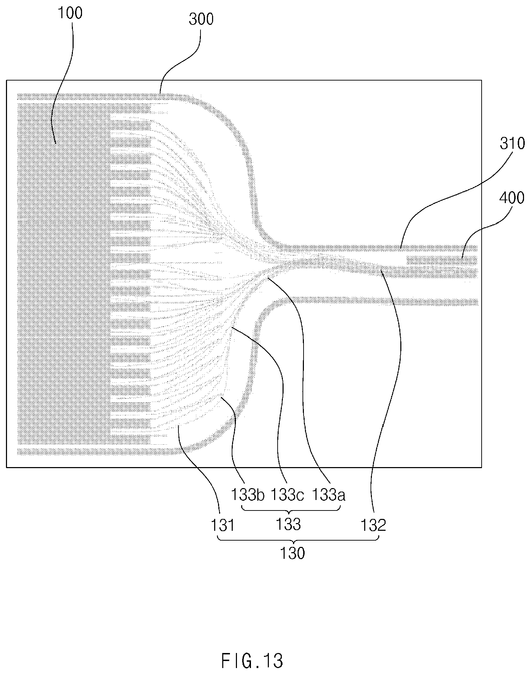

In Experimental Example 1, the first experimental piece before the pushing process (e) is photographed. As a result, a photographic image as illustrated in FIG. 13 may be obtained.

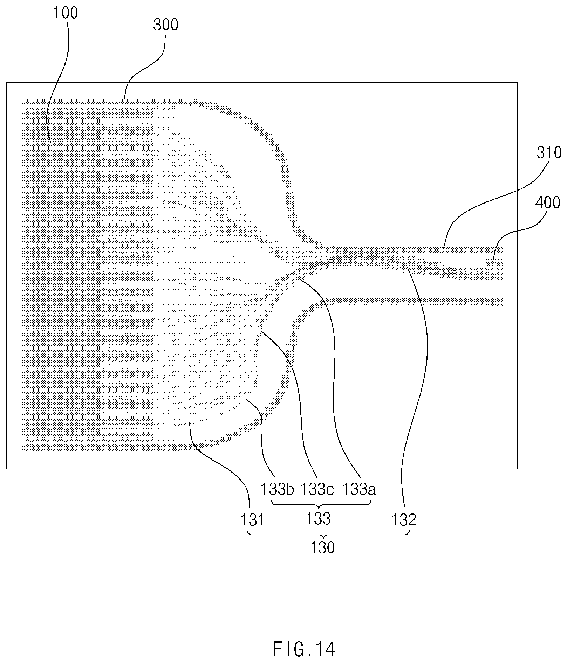

In Experimental Example 2, an electrode lead 400 of the second experimental piece is pushed by 0.5 mm in the pushing process (e), and then, the second experimental piece is photographed. As a result, a photographic image as illustrated in FIG. 14 may be obtained. That is, it is confirmed that the bent angle of the electrode tab 130 is changed in the second experimental piece rather than in the first experimental piece, and a phenomenon in which a gap occurs between the electrode and the separator does not occur.

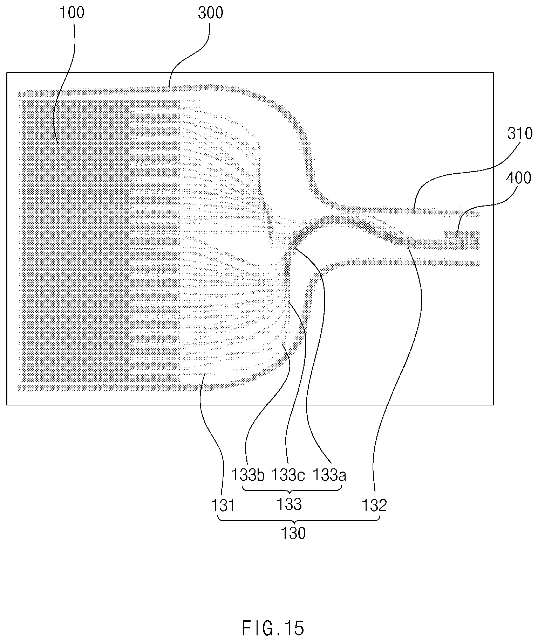

In Experimental Example 3, an electrode lead 400 of the third experimental piece is pushed by 1.0 mm in the pushing process (e), and then, the third experimental piece is photographed. As a result, a photographic image as illustrated in FIG. 15 may be obtained. That is, it is confirmed that the bent angle of the electrode tab 130 is changed in the third experimental piece rather than in the second experimental piece, and a phenomenon, in which a gap between the electrode and the separator is widened, does not occur.

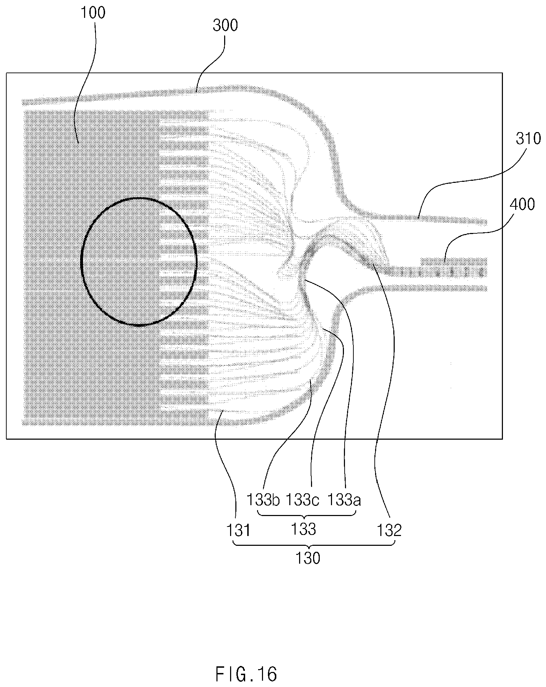

In Experimental Example 4, an electrode lead 400 of the fourth experimental piece is pushed by 1.2 mm in the pushing process (e), and then, the fourth experimental piece is photographed. As a result, a photographic image as illustrated in FIG. 16 may be obtained. That is, it is seen that the bending angle of the electrode tab 130 is significantly changed in the fourth experimental piece rather than in the third experimental piece. However, it is seen that defects, in which a gap between the electrode and the separator is widened, occur.

Therefore, as the results of the above experiments, in order to prevent the defects from occurring in the pushing process (e), the lead film 400 has to be pushed by 0.5 mm to 1.5 mm, preferably by 1.0 mm, and when the pushing excesses the above-described values, defects, in which the gap between the electrode and the separator is widened, occur.

Accordingly, the scope of the present invention is defined by the appended claims

### [Description of the Symbols]

- 1:: Secondary battery
- 100:: Electrode assembly
- 110:: Electrode
- 120:: Separator
- 130:: Electrode tab
- 131:: Connection part
- 132:: Coupling part
- 133:: Bent part
- 133a:: First bent surface
- 133b:: Second bent surface
- 133c:: Connection surface
- 200:: Electrode lead
- 300:: Pouch
- 400:: Lead film

## Claims

1. A secondary battery (1) comprising:
an electrode assembly (100) provided with a plurality of electrodes (110), a separator (120) interposed between the plurality of electrodes (110), and a plurality of electrode tabs (130) respectively connected to the plurality of electrodes (110);
an electrode lead (200) coupled to the plurality of electrode tabs (130); and
a pouch (300) configured to accommodate the electrode assembly (100) in a state in which a front end of the electrode lead (200) is withdrawn to the outside,
wherein the plurality of electrode tabs (130) comprise a connection part (131) formed as a substantially straight portion connected to each of the plurality of electrodes (110), a coupling part (132) formed as a substantially straight portion coupled to the electrode lead (200) in a state of being combined into a mass, and a bent part (133) provided between the connection part (131) and the coupling part (132), and
the bent part (133) comprises a first bent surface (133a) connected to the coupling part (132) and bent at a first-b angle, a second bent surface (133b) connected to the connection part (131) and bent at a second-b angle, and a connection surface (133c) formed as a substantially straight portion configured to connect the first bent surface (133a) to the second bent surface (133b),
**characterised in that**
the first-b angle between the coupling part (132) and the connection surface (133c) is greater than the second-b angle between the connection surface (133c) and the connection part (131).

2. The secondary battery (1) of claim 1, wherein the first-b angle of the first bent surface (133a) is 100° to 120°.

3. The secondary battery (1) of claim 2, wherein the first-b angle of the first bent surface (133a) is 109° to 116°.

4. The secondary battery (1) of claim 1, wherein the second-b angle of the second bent surface (133b) is 94° to 104°.

5. The secondary battery (1) of claim 4, wherein the second-b angle of the second bent surface (133b) is 98° to 100°.

6. The secondary battery (1) of claim 1, wherein, when viewed in a longitudinal direction of the electrode assembly (100), a distance (α) from one end to the other end of the connection surface (133c) to which each of the first bent surface (133a) and the second bent surface (133b) is connected is 0.5 mm to 2.0 mm.

7. The secondary battery (1) of claim 1, wherein, when viewed in a longitudinal direction of the electrode assembly (100), a distance (β) from an end of the separator (120) to an end of the coupling part (132), which face each other, is 2.0 mm to 4.5 mm.

8. A method for manufacturing a secondary battery (1), the method comprising:
a process (a) of preparing a plurality of electrodes (110) provided with electrode tabs (130) and alternately disposing a plurality of electrodes (110) and a plurality of separators (120) to manufacture an electrode assembly (100);
a process (b) of bending the plurality of electrode tabs (130) to be combined, wherein the bent electrode tab (130) is provided with a connection part (131) connected to each of the electrodes (110), a coupling part (132) which is combined into a mass and to which an electrode lead (200) is coupled, and a bent part provided between the connection part (131) and the coupling part (132), and the bent part is provided with a first bent surface (133a) coupled to the coupling part (132) and bent at a first-a angle, a second bent surface (133b) connected to the connection part (131) and bent at a second-a angle, and a connection surface (133c) connecting the first bent surface (133a) to the second bent surface (133b);
a process (c) of coupling the electrode lead (200) to the coupling part (132) of the electrode tab (130);
a process (d) of accommodating the electrode assembly (100) in a pouch (300) in a state in which a front end of the electrode lead (200) is withdrawn to the outside and then attaching an lead film (400) to the electrode lead (200) disposed on the sealing part (310) of the pouch (300);
a process (e), of pushing the lead film (400) by a first length into the pouch (300) thereby inserting the electrode lead (200) by the first length into the pouch (300) by the lead film (400) and deforming the bent part (133) by pressing the bent part (133) with the electrode lead (200), such that the first-a angle of the first bent surface (133a) is reduced to a first-b angle, and the second-a angle of the second bent surface (133b) is reduced to a second-b angle, wherein the deformation is such that the first-b angle between the coupling part (132) and the connection surface (133c) is greater than the second-b angle between the connection surface (133c) and the connection part (131),
and a process (f) of sealing the sealing part (310) of the pouch (300) on which the lead film (400) is disposed.

9. The method of claim 8, wherein, in the process (e), the first-b angle of the first bent surface (133a) is 100° to 120°.

10. The method of claim 8, wherein, in the process (e), the second-b angle of the second bent surface (133b) is 94° to 104°.

11. The method of claim 8, wherein, in the process (d), when the lead film (400) is attached to the electrode lead (200), the lead film (400) is attached to be withdrawn further by the first length to the outside of the pouch (300), and
in the process (e), the lead film (400) is pushed by the first length into the pouch (300),
wherein the first length is 0.5 mm to 1.5 mm.

12. The method of claim 8, wherein, in the process (e), when viewed in a longitudinal direction of the electrode assembly, a distance (α) from one end to the other end of the connection surface (133c) to which each of the first bent surface (133a) and the second bent surface (133b) is connected is 0.5 mm to 2.0 mm.

13. The method of claim 8, wherein, when the process (e) is completed, a distance (β) between an end of the separator (120) and an end of the coupling part (132), which face each other, is 2.0 mm to 4.5 mm.

14. The method of claim 8, wherein a process (e1) of inspecting whether the first-b angle of the first bent surface (133a) and the second-b angle of the second bent surface (133b) are within a preset angle range is further performed between the process (e) and the process (f).

15. The method of claim 14, wherein, in the process (e1), when viewed in a longitudinal direction of the electrode assembly (100), a distance (α) from one end to the other end of the connection surface (133c) to which each of the first bent surface (133a) and the second bent surface (133b) is connected is 0.5 mm to 2.0 mm.

## Patentansprüche

1. Sekundärbatterie (1), umfassend:
eine Elektrodenbaugruppe (100), die mit einer Mehrzahl von Elektroden (110), einem zwischen der Mehrzahl von Elektroden (110) angeordneten Separator (120) und einer Mehrzahl von Elektrodenfahnen (130), die jeweils mit der Mehrzahl von Elektroden (110) verbunden sind, versehen ist;
einen Elektrodenleiter (200), der mit der Mehrzahl von Elektrodenfahnen (130) gekoppelt ist; und
ein Pouch (300), das dafür konfiguriert ist, die Elektrodenbaugruppe (100) in einem Zustand aufzunehmen, in dem ein vorderes Ende des Elektrodenleiters (200) nach außen herausgeführt ist,
wobei die Mehrzahl von Elektrodenfahnen (130) einen Verbindungsteil (131), der als ein im Wesentlichen gerader Abschnitt ausgebildet ist, der mit jeder der Mehrzahl von Elektroden (110) verbunden ist, einen Kopplungsteil (132), der als ein im Wesentlichen gerader Abschnitt ausgebildet ist, der mit dem Elektrodenleiter (200) in einem Zustand, in dem sie zu einer Masse vereinigt sind, gekoppelt ist, und einen gebogenen Teil (133), der zwischen dem Verbindungsteil (131) und dem Kopplungsteil (132) vorgesehen ist, umfasst, und
der gebogene Teil (133) eine erste gebogene Fläche (133a), die mit dem Kopplungsteil (132) verbunden und in einem ersten b-Winkel gebogen ist, eine zweite gebogene Fläche (133b), die mit dem Verbindungsteil (131) verbunden und in einem zweiten b-Winkel gebogen ist, und eine Verbindungsfläche (133c) umfasst, die als ein im Wesentlichen gerader Abschnitt ausgebildet ist, der dafür konfiguriert ist, die erste gebogene Fläche (133a) mit der zweiten gebogenen Fläche (133b) zu verbinden,
**dadurch gekennzeichnet, dass**
der erste b-Winkel zwischen dem Kopplungsteil (132) und der Verbindungsfläche (133c) größer ist als der zweite b-Winkel zwischen der Verbindungsfläche (133c) und dem Verbindungsteil (131).

2. Sekundärbatterie (1) nach Anspruch 1, wobei der erste b-Winkel der ersten gebogenen Fläche (133a) 100 ° bis 120 ° beträgt.

3. Sekundärbatterie (1) nach Anspruch 2, wobei der erste b-Winkel der ersten gebogenen Fläche (133a) 109 ° bis 116 ° beträgt.

4. Sekundärbatterie (1) nach Anspruch 1, wobei der zweite b-Winkel der zweiten gebogenen Fläche (133b) 94 ° bis 104 ° beträgt.

5. Sekundärbatterie (1) nach Anspruch 4, wobei der zweite b-Winkel der zweiten gebogenen Fläche (133b) 98 ° bis 100 ° beträgt.

6. Sekundärbatterie (1) nach Anspruch 1, wobei, in einer Längsrichtung der Elektrodenbaugruppe (100) gesehen, ein Abstand (α) von einem Ende zum anderen Ende der Verbindungsfläche (133c), mit der sowohl die erste gebogene Fläche (133a) als auch die zweite gebogene Fläche (133b) verbunden sind, 0,5 mm bis 2,0 mm beträgt.

7. Sekundärbatterie (1) nach Anspruch 1, wobei, in einer Längsrichtung der Elektrodenbaugruppe (100) gesehen, ein Abstand (β) von einem Ende des Separators (120) bis zu einem Ende des Kopplungsteils (132), die einander zugewandt sind, 2,0 mm bis 4,5 mm beträgt.

8. Verfahren zur Herstellung einer Sekundärbatterie (1), wobei das Verfahren umfasst:
ein Verfahren (a) des Bereitstellens einer Mehrzahl von Elektroden (110), die mit Elektrodenfahnen (130) versehen sind, und des abwechselnden Anordnens einer Mehrzahl von Elektroden (110) und einer Mehrzahl von Separatoren (120), um eine Elektrodenbaugruppe (100) herzustellen;
ein Verfahren (b) des Biegens der Mehrzahl von zu vereinigenden Elektrodenfahnen (130), wobei die gebogene Elektrodenfahne (130) mit einem Verbindungsteil (131), der mit jeder der Elektroden (110) verbunden ist, einem Kopplungsteil (132), der zu einer Masse vereinigt ist und mit dem ein Elektrodenleiter (200) gekoppelt ist, und einem gebogenen Teil versehen ist, der zwischen dem Verbindungsteil (131) und dem Kopplungsteil (132) vorgesehen ist, und der gebogene Teil mit einer ersten gebogenen Fläche (133a), die mit dem Kopplungsteil (132) gekoppelt und in einem ersten a-Winkel gebogen ist, einer zweiten gebogenen Fläche (133b), die mit dem Verbindungsteil (131) verbunden und in einem zweiten a-Winkel gebogen ist, und einer Verbindungsfläche (133c) versehen ist, die die erste gebogene Fläche (133a) mit der zweiten gebogenen Fläche (133b) verbindet;
ein Verfahren (c) des Koppelns des Elektrodenleiters (200) mit dem Kopplungsteil (132) der Elektrodenfahne (130);
ein Verfahren (d) des Aufnehmens der Elektrodenbaugruppe (100) in einem Pouch (300) in einem Zustand, in dem ein vorderes Ende des Elektrodenleiters (200) nach außen herausgeführt ist, und des anschließenden Anbringens eines Leiterfilms (400) an dem Elektrodenleiter (200), der auf dem Siegelteil (310) des Pouchs (300) angeordnet ist;
ein Verfahren (e) des Schiebens des Leiterfilms (400) um eine erste Länge in das Pouch (300), wodurch der Elektrodenleiter (200) um die erste Länge durch den Leiterfilm (400) in das Pouch (300) eingeführt wird, und des Verformens des gebogenen Teils (133) durch Pressen des gebogenen Teils (133) mit dem Elektrodenleiter (200), so dass der erste a-Winkel der ersten gebogenen Fläche (133a) auf einen ersten b-Winkel verringert wird und der zweite a-Winkel der zweiten gebogenen Fläche (133b) auf einen zweiten b-Winkel verringert wird, wobei die Verformung derart ist, dass der erste b-Winkel zwischen dem Kopplungsteil (132) und der Verbindungsfläche (133c) größer ist als der zweite b-Winkel zwischen der Verbindungsfläche (133c) und dem Verbindungsteil (131), und
ein Verfahren (f) des Versiegelns des Siegelteils (310) des Pouchs (300), auf dem der Leiterfilm (400) angeordnet ist.

9. Verfahren nach Anspruch 8, wobei im Verfahren (e) der erste b-Winkel der ersten gebogenen Fläche (133a) 100 ° bis 120 ° beträgt.

10. Verfahren nach Anspruch 8, wobei im Verfahren (e) der zweite b-Winkel der zweiten gebogenen Fläche (133b) 94 ° bis 104 ° beträgt.

11. Verfahren nach Anspruch 8, wobei im Verfahren (d), wenn der Leiterfilm (400) an dem Elektrodenleiter (200) angebracht wird, der Leiterfilm (400) so angebracht wird, dass er um die erste Länge weiter nach außen aus dem Pouch (300) herausgeführt ist, und
im Verfahren (e) der Leiterfilm (400) um die erste Länge in das Pouch (300) geschoben wird,
wobei die erste Länge 0,5 mm bis 1,5 mm beträgt.

12. Verfahren nach Anspruch 8, wobei, in einer Längsrichtung der Elektrodenbaugruppe (100) gesehen, ein Abstand (α) von einem Ende zum anderen Ende der Verbindungsfläche (133c), mit der sowohl die erste gebogene Fläche (133a) als auch die zweite gebogene Fläche (133b) verbunden sind, 0,5 mm bis 2,0 mm beträgt.

13. Verfahren nach Anspruch 8, wobei, wenn das Verfahren (e) abgeschlossen ist, ein Abstand (β) zwischen einem Ende des Separators (120) und einem Ende des Kopplungsteils (132), die einander zugewandt sind, 2,0 mm bis 4,5 mm beträgt.

14. Verfahren nach Anspruch 8, wobei ein Verfahren (e1) des Überprüfens, ob der erste b-Winkel der ersten gebogenen Fläche (133a) und der zweite b-Winkel der zweiten gebogenen Fläche (133b) innerhalb eines voreingestellten Winkelbereichs liegen, ferner zwischen dem Verfahren (e) und dem Verfahren (f) durchgeführt wird.

15. Verfahren nach Anspruch 14, wobei im Verfahren (e1), in einer Längsrichtung der Elektrodenbaugruppe (100) gesehen, ein Abstand (α) von einem Ende zum anderen Ende der Verbindungsfläche (133c), mit der sowohl die erste gebogene Fläche (133a) als auch die zweite gebogene Fläche (133b) verbunden sind, 0,5 mm bis 2,0 mm beträgt.

## Revendications

1. Batterie secondaire (1) comprenant :
un ensemble d'électrodes (100) pourvu d'une pluralité d'électrodes (110), d'un séparateur (120) interposé entre la pluralité d'électrodes (110), et d'une pluralité de pattes d'électrode (130) connectées respectivement à la pluralité d'électrodes (110) ;
un conducteur d'électrode (200) couplé à la pluralité de pattes d'électrode (130) ; et
une poche (300) configurée pour loger l'ensemble d'électrodes (100) dans un état dans lequel une extrémité avant du conducteur d'électrode (200) est tirée vers l'extérieur,
dans laquelle la pluralité de pattes d'électrode (130) comprend une partie de connexion (131) formée comme une portion sensiblement droite connectée à chacune de la pluralité d'électrodes (110), une partie de couplage (132) formée comme une portion sensiblement droite couplée au conducteur d'électrode (200) dans un état d'être combinées en une masse, et une partie pliée (133) prévue entre la partie de connexion (131) et la partie de couplage (132), et
la partie pliée (133) comprend une première surface pliée (133a) connectée à la partie de couplage (132) et pliée selon un premier angle b, une seconde surface pliée (133b) connectée à la partie de connexion (131) et pliée selon un second angle b, et une surface de connexion (133c) formée comme une portion sensiblement droite configurée pour connecter la première surface pliée (133a) à la seconde surface pliée (133b),
**caractérisée en ce que**
le premier angle b entre la partie de couplage (132) et la surface de connexion (133c) est supérieur au second angle b entre la surface de connexion (133c) et la partie de connexion (131).

2. Batterie secondaire (1) selon la revendication 1, dans laquelle le premier angle b de la première surface pliée (133a) est de 100 ° à 120 °.

3. Batterie secondaire (1) selon la revendication 2, dans laquelle le premier angle b de la première surface pliée (133a) est de 109 ° à 116 °.

4. Batterie secondaire (1) selon la revendication 1, dans laquelle le second angle b de la seconde surface pliée (133b) est de 94 ° à 104 °.

5. Batterie secondaire (1) selon la revendication 4, dans laquelle le second angle b de la seconde surface pliée (133b) est de 98 ° à 100 °.

6. Batterie secondaire (1) selon la revendication 1, dans laquelle, lorsqu'elle est vue dans une direction longitudinale de l'ensemble d'électrodes (100), une distance (α) d'une extrémité à l'autre extrémité de la surface de connexion (133c) à laquelle chacune de la première surface pliée (133a) et de la seconde surface pliée (133b) est connectée est de 0,5 mm à 2,0 mm.

7. Batterie secondaire (1) selon la revendication 1, dans laquelle, lorsqu'elle est vue dans une direction longitudinale de l'ensemble d'électrodes (100), une distance (β) depuis une extrémité du séparateur (120) jusqu'à une extrémité de la partie de couplage (132), qui se font face, est de 2,0 mm à 4,5 mm.

8. Procédé de fabrication d'une batterie secondaire (1), le procédé comprenant :
un procédé (a) de préparation d'une pluralité d'électrodes (110) pourvues de pattes d'électrode (130) et de disposition alternée d'une pluralité d'électrodes (110) et d'une pluralité de séparateurs (120) pour fabriquer un ensemble d'électrodes (100) ;
un procédé (b) de pliage de la pluralité de pattes d'électrode (130) à combiner, dans lequel la patte d'électrode (130) pliée est pourvue d'une partie de connexion (131) connectée à chacune des électrodes (110), d'une partie de couplage (132) qui est combinée en une masse et à laquelle un conducteur d'électrode (200) est couplé, et d'une partie pliée prévue entre la partie de connexion (131) et la partie de couplage (132), et la partie pliée est pourvue d'une première surface pliée (133a) couplée à la partie de couplage (132) et pliée selon un premier angle a, d'une seconde surface pliée (133b) connectée à la partie de connexion (131) et pliée selon un second angle a, et d'une surface de connexion (133c) connectant la première surface pliée (133a) à la seconde surface pliée (133b) ;
un procédé (c) de couplage du conducteur d'électrode (200) à la partie de couplage (132) de la patte d'électrode (130) ;
un procédé (d) de logement de l'ensemble d'électrodes (100) dans une poche (300) dans un état dans lequel une extrémité avant du conducteur d'électrode (200) est tirée vers l'extérieur, puis de fixation d'un film de conducteur (400) au conducteur d'électrode (200) disposé sur la partie de scellement (310) de la poche (300) ;
un procédé (e) consistant à pousser le film de conducteur (400) d'une première longueur dans la poche (300), insérant ainsi le conducteur d'électrode (200) de la première longueur dans la poche (300) par le film de conducteur (400) et à déformer la partie pliée (133) en pressant la partie pliée (133) avec le conducteur d'électrode (200), de sorte que le premier angle a de la première surface pliée (133a) soit réduit à un premier angle b, et que le second angle a de la seconde surface pliée (133b) soit réduit à un second angle b, dans lequel la déformation est telle que le premier angle b entre la partie de couplage (132) et la surface de connexion (133c) est supérieur au second angle b entre la surface de connexion (133c) et la partie de connexion (131), et
un procédé (f) de scellement de la partie de scellement (310) de la poche (300) sur laquelle est disposé le film de conducteur (400).

9. Procédé selon la revendication 8, dans lequel, dans le procédé (e), le premier angle b de la première surface pliée (133a) est de 100 ° à 120 °.

10. Procédé selon la revendication 8, dans lequel, dans le procédé (e), le second angle b de la seconde surface pliée (133b) est de 94 ° à 104 °.

11. Procédé selon la revendication 8, dans lequel, dans le procédé (d), lorsque le film de conducteur (400) est fixé au conducteur d'électrode (200), le film de conducteur (400) est fixé pour être tiré davantage de la première longueur vers l'extérieur de la poche (300), et
dans le procédé (e), le film de conducteur (400) est poussé de la première longueur dans la poche (300),
dans lequel la première longueur est de 0,5 mm à 1,5 mm.

12. Procédé selon la revendication 8, dans lequel, lorsqu'il est vu dans une direction longitudinale de l'ensemble d'électrodes (100), une distance (α) d'une extrémité à l'autre extrémité de la surface de connexion (133c) à laquelle chacune de la première surface pliée (133a) et de la seconde surface pliée (133b) est connectée est de 0,5 mm à 2,0 mm.

13. Procédé selon la revendication 8, dans lequel, lorsque le procédé (e) est terminé, une distance (β) entre une extrémité du séparateur (120) et une extrémité de la partie de couplage (132), qui se font face, est de 2,0 mm à 4,5 mm.

14. Procédé selon la revendication 8, dans lequel un procédé (e1) consistant à inspecter si le premier angle b de la première surface pliée (133a) et le second angle b de la seconde surface pliée (133b) se situent dans une plage d'angles prédéfinie est en outre exécuté entre le procédé (e) et le procédé (f).

15. Procédé selon la revendication 14, dans lequel, dans le procédé (e1), lorsqu'il est vu dans une direction longitudinale de l'ensemble d'électrodes (100), une distance (α) d'une extrémité à l'autre extrémité de la surface de connexion (133c) à laquelle chacune de la première surface pliée (133a) et de la seconde surface pliée (133b) est connectée est de 0,5 mm à 2,0 mm.
